# EUROPEAN PATENT SPECIFICATION

(11) **EP 1 187 036 B1**
(45) Date of publication and mention of the grant of the patent: **28.03.2012**
(21) Application number: 00119377.0
(22) Date of filing: 11.09.2000
(51) Int. Cl.: G06Q 20/00, G06F 17/30, H04L 29/06, G07F 7/10

(54) **Information input-output device, information input-output system, mobile communication terminal, and input-output control unit**
Daten Ein-Ausgangsgerät, Daten Ein-Ausgangssystem, mobiles Kommunikationsendgerät, und Ein-Ausgangssteuereinheit
Appareil d'entrée et de sortie de données, système d'entrée et de sortie de données, terminal de communication mobile, et unité de commande d'entrée et de sortie

(43) Date of publication of application: 13.03.2002
(73) Proprietor: Ricoh Company, Ltd., Tokyo 143-8555 (JP)
(72) Inventor: Mizuguchi, Takahiro, Ohta-ku, Tokyo 143-8555 (JP)
(74) Representative: Schwabe - Sandmair - Marx

(56) References cited:
- EP-A- 0 973 350
- WO-A-00/48076
- WO-A1-00/00972
- US-A- 5 249 230
- US-A- 5 633 932
- US-A- 6 012 083
- US-B1- 6 330 490
- PATENT ABSTRACTS OF JAPAN vol. 1998, no. 13, 30 November 1998 (1998-11-30) & JP 10 222527 A (CASIO COMPUT CO LTD), 21 August 1998 (1998-08-21)

## Description

### FIELD OF THE INVENTION

The present invention relates to an information input-output device and an information input-output system which allows a user to retrieve information from a host computer using a mobile communication terminal. More particularly, this invention relates to an information input-output device and an information input-output system which enables input or output of information after the user is authenticated.

### BACKGROUND OF THE INVENTION

A conventional information input-output system is explained below. In recent years, portable information devices such as note PCs and PDAs (Personal Digital Assistants) and mobile communication terminals such as PHSs (Personal Handy-Phone System) and cellular phones have been widely used. In association with the widespread use of these devices, the processing of creating documents or the processing of communications by electronic mail can easily be performed wherever the devices may be used. Further, by using a communication function provided in these devices, a variety of services (e.g., services of banks (reference to balance, money transfer to an account, or so), booking of tickets, or booking of airline tickets) can be provided from carriers over a network (communication line).

However, these conventional portable information devices carry no printer to print out created documents and information obtained through the variety of services. Therefore, printout cannot easily be performed on the road, for example. To solve the problem, there has been proposed an information input-output system which allows a user of the portable information device to instruct printout of desired information to a spot (printer) in a destination (the place where the user goes) specified by the user of the portable information device.

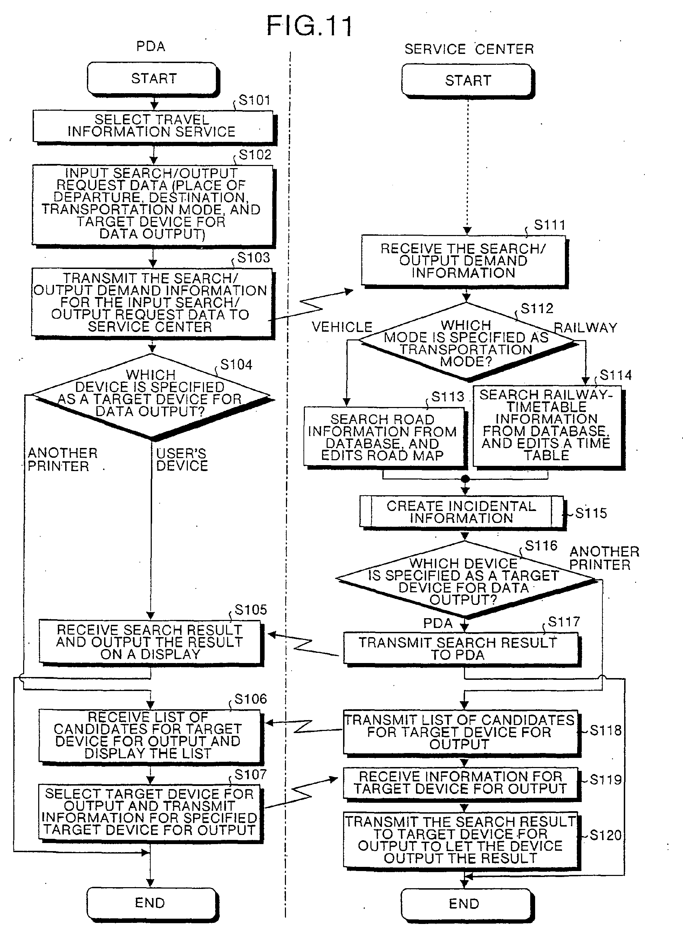

Fig. 11 is a flow chart showing the processing of information output in the information input-output system described in JP, HEI 10-222527A. This chart shows the processing between a PDA and a service center that provides the service to print out desired information onto a specified spot in a destination. Fig. 11 specifically shows a case in which a user is provided with a travel information service.

The user of a PDA selects a travel information service out of a variety of services by input operation through the PDA (step S101). The user then inputs search/output request data indicating information for a destination where the user goes, namely a place of departure, a destination, a mode of transportation, and a target device for data output, or so (step S102) through the PDA, and transmits search/output demand information relating to this search/ output request data to a service center (step S103).

On the other hand, the service center receives the search/output demand information (step S111) and checks a mode of transportation (step S112). For example, when the transportation mode is a car (step S112, vehicle), the service center searches geographical information from an existing database based on the simultaneously received information for the place of departure and the destination, and edits a road map (step S113). When the transportation mode is a train (step S112, railway), the service center searches information for timetables from the existing database based on the simultaneously received information for the place of departure and the destination, and edits a railway timetable covering from the place of departure to the destination (step S114).

The service center then performs the processing of creating information incidental to the information edited at step S113 and step S114 (step S115) . At this step, the service center creates information for sightseeing around the destination and weather information. The service center then specifies a spot (a printer or a display of the PDA), to which the information created so far is to be output (step S116), based on the target device for data output specified by the user (step S104).

For example, when the display of the PDA is specified (step S104: user's device, step S116: PDA), the service center transmits the previously created information to the PDA (step S117), and the PDA then outputs the information onto the display (step S105).

On the other hand, when the printer is specified (step S104: another printer, step S116: another printer), the service center searches various types of facilities (e.g. , convenience stores, gas stations, SA, or tollbooths on a highway) where the same type of printer as that stored in the database is located, creates a list of candidates for a target device for output, and transmits the list to the PDA (step S118). The PDA then displays the list on its screen (step S106), the user selects a target device for output of the candidates, and transmits the information for the specified target device for output (step S107). At the last step, the service center receives the information for the specified target device for output (step S119), and controls so as to permit the printer, that is specified as a target device for output, to print out the information such as the map or the timetable previously created (step S120).

As explained above, in the conventional information input-output system, even when the user of the portable information device (PDA or the like) is on the road, a target device for output can selectively be changed according to changes of a destination based on the service provided from the service center. Therefore, desired information can easily be output onto a printer installed in a specified location.

In the conventional information input-output system, however, user authentication is not confirmed in an input-output control unit for a printer or so as an object for output. Therefore, printout becomes possible by anybody operating this terminal (a portable information device, or a mobile communication terminal such as a PHS or a cellular phone). Namely, there has been a problem that reliability of security of information can not be ensured, because the user of the mobile communication terminal is not verified whether he or she is an authorized holder of this terminal.

US-6,012,083 A relates to a method and apparatus for document processing using agents to process transactions created based on document content. A Web agency is interposed between a Web client and a Web server to transform the requests from the Web client prior to sending the requests on to the Web server, to transform the document returned from the Web server prior to sending the document on to the Web client, and to store state information about the user of various Web clients connected to the Web agency. The Web agency can be transparent to, and independent of, the Web client and the Web server. The Web agency might be used as a peripheral agency, a personal service agency or a document server. One such Web agency is a printer server which transparently renders documents. For hypertext documents, the rendering process includes generating machine-readable link references.

EP 0 973 350 A describes a mobile device which has a display screen and a message buffer which temporarily stores a message from a computer on a data network to which the device is connected through a wireless link, the message having an associated service identifier. A local services data area is included to store local services data which controls operation of said mobile device. The device also has an access control table including authorised service identifiers that are permitted to access the local services data area. The mobile device includes an access controller that controls access to the local services data area such that the local services data cannot be altered by an application that utilizes the message from the computer the service identifier associated with the message matches at least one of the authorized service identifiers, otherwise access is denied.

WO 00/48076 A relates to a method and apparatus for secure entry of access codes in a computer environment. A user inputting his access code into a computing environment to access a transaction is at risk of losing the access code to an attacker who has physical or electronic access to the computing environment. To minimize this risk, the access code can be entered via a plurality of user-selectable fields, each of which takes on a series of values in the initial display. The initially displayed values are established in a random or otherwise unpredictable manner using a pseudo-random number generator. The user then uses a mouse, keyboard, or other input device to increment each of the selectable fields until the access code is correctly entered. Because of the randomization of the initial state, an attacker tracking the locations or number of mouse clicks or other navigation actions can not determine the finally entered access code by, e.g., computing the offset from a known initial state.

US-5,249,230 A relates to an authentication system. An environment which includes a communications network, user terminals, and an authentication center provides communication services only to legitimate subscribers. The center receives an equipment ID for each terminal and uses a secret key to encrypt the equipment ID with a user ID and an error detection code to form an encrypted block. This block is programmed into an authentication module and sent to the subscriber for installation in the subscriber's terminal. The center sends a public key to authentication nodes of the network. When the subscriber operates the terminal to gain access to the network, a log-on message, which includes the encrypted block and an unencrypted version of the equipment ID, is sent to an authentication node. The authentication node decrypts the encrypted block and evaluates the IDs to determine whether to grant access to services offered by the network.

WO 00/00972 A relates to a data vending machine system and a method thereof, and in particular to a data vending machine system and a method thereof which are capable of selecting a certain music file, recording the selected music file onto a recording medium and printing a selected image and character message on a surface of the recording medium. The present invention includes a host computer for storing a digital music file and a plurality of remote data vending machine connected with the host computer. The data vending machine includes at least one listing and reserving apparatus for providing a reservation function of the music files selected by the customer, a database and fabrication control apparatus for storing a part of the music files stored in the host computer and recording the selected music file onto the recording medium, and a charge paying unit. There are further provided a main apparatus which performs the entire control operation of the data vending machine so that the music files selected by the customer is fabricated as one music album, and a network apparatus for thereby effectively managing the database of the remote data vending machine and minimizing the waiting time of the customer.

US-5,633,932 A describes a system and method for preventing a copy of a document to the output from a printing node until the printing node authenticates the intended recipient. The system includes a sending node, a printing node and a communication link coupling these nodes together in a network fashion. The sending node has access to a public key of the printing node and uses this public key to encrypt a header and document before transmission to the printing node over the communication link. The priority node has access to its private key to decrypt the header to ascertain whether the document requires authentication by the intended recipient before being output.

### SUMMARY OF THE INVENTION

The invention is defined by the subject-matter of the independent claims. The dependent claims are directed to advantageous embodiments.

### ADVANTAGES OF THE INVENTION

Advantageously, it is provided an information input-output device, an information input-output system which allows a user of a mobile communication terminal to easily access information within a host computer that provides a variety of services. Further, this information input-output system enables easy input or output of the information after the user of an input-output control unit is authenticated through operation with the terminal.

Advantageously by entering an authentication code into an input-output control unit through operation with a terminal or a keyboard, only the user of this terminal, who knows this particular authentication code, retrieves desired data stored in a service provision unit. Namely, only when the user of the terminal is verified as a holder (subscriber) of this terminal, it is allowed to output the desired data. Therefore, with regard to the security of the information, higher reliability can be ensured as compared to that of the conventional method.

Advantageously, by entering an authentication code into an input-output control unit through operation with a terminal, only the user of this terminal, who knows this particular authentication code, outputs desired data through the terminal. Namely, only when the user of the terminal is verified as a holder (subscriber) of this terminal, it is allowed to output the desired data. Therefore, with regard to the security of the information, higher reliability can be ensured as compared to that of the conventional method.

Further, the user of the terminal enters a user ID into an input-output control unit through a terminal or a keyboard, and then transmits an output command (output job code) after the user is authenticated. In response to reception of the code, the input-output control unit provides controls for output. Therefore, the output job code is transmitted only when output is required.

Further, with regard to the settlement of charging, charging can surely be settled by using any device such as a cash collection device into which a specified amount of cash is previously inserted, or electronic cash.

Further, since a map is displayed on the screen of the terminal, any of input-output control units, that are installed around the location where the user is, can efficiently be specified.

Advantageously, by entering an authentication code into an input-output control unit through operation with its keyboard, only the user of this input-output control unit, who knows this particular authentication code, retrieves data within a service provision unit. Namely, only when the user of this input-output control unit is verified as a subscriber who can access the data within the service provision unit, it is allowed to output the desired data. Therefore, with regard to the security of the information, high reliability can be ensured.

Advantageously, by entering an authentication code into an input-output control unit through operation with its keyboard, only the user of this input-output control unit, who knows this particular authentication code, retrieves data within another input-output control unit. Namely, only when the user of the specified input-output control unit is verified as a subscriber who can access the data within another input-output control unit, it is allowed to output the desired data. Therefore, with regard to the security of the information, high reliability can be ensured.

Further, the input-output control unit has devices such 20 as a printer and a storage device (memory) as external equipment for output.

Further, the input-output control unit has devices such 21 as a sound-source data playback device and a storage device (memory) as external equipment for output.

Further, the input-output control unit has devices such 22 as a color printer, a digital camera, and a storage device (memory) as external equipment for output.

Advantageoulsy, an 23 authentication code is entered into an input-output control unit through operation with a terminal. Therefore, only when the user of this terminal is verified as a holder (subscriber) of this terminal, it is allowed to output desired data.

Advantageously, with 24 regard to the settlement of charging, charging can surely be settled by using any device such as a cash collection device into which a specified amount of cash is previously inserted, or electronic cash.

Other advantages and features of this invention will become 25 understood from the following description with reference to the accompanying drawings.

### BRIEF DESCRIPTION OF THE DRAWINGS

Fig. 1 shows a configuration of a first embodiment of the 26 information input-output system according to this invention;
Fig. 2 shows a detailed configuration within an 27 input-output control unit 6 and a configuration around the input-output control unit 6;
Fig. 3 shows a flow chart of the processing in a terminal 28 1 (addressing first control and second control);
Fig. 4 shows a flow chart of the processing in the terminal 29 1 (addressing third control) and the settlement of charging;
Fig. 5 shows an example of the operation for the first 30 control and the second control in the information input-output system;
Fig. 6 shows the operation for the third control in the information input-output system;
Fig. 7 shows an example of the operation for the first control and the second control in the information input-output system;
Fig. 8 shows a configuration of a second embodiment of the information input-output system which is not part of the present invention;
Fig. 9 shows a configuration of a third embodiment of the information input-output system which is not part of the present invention;
Fig. 10 shows a configuration of a fourth embodiment of the information input-output system which is not part of the present invention; and
Fig. 11 shows a flow chart of the processing for output of information in the conventional information input-output system.

### DETAILED DESCRIPTION OF THE PREFERRED EMBODIMENTS

Preferred embodiments of the information input-output 27 system according to this invention are explained in detail below with reference to the drawings. It should be noted that the present invention is not limited by these embodiments.

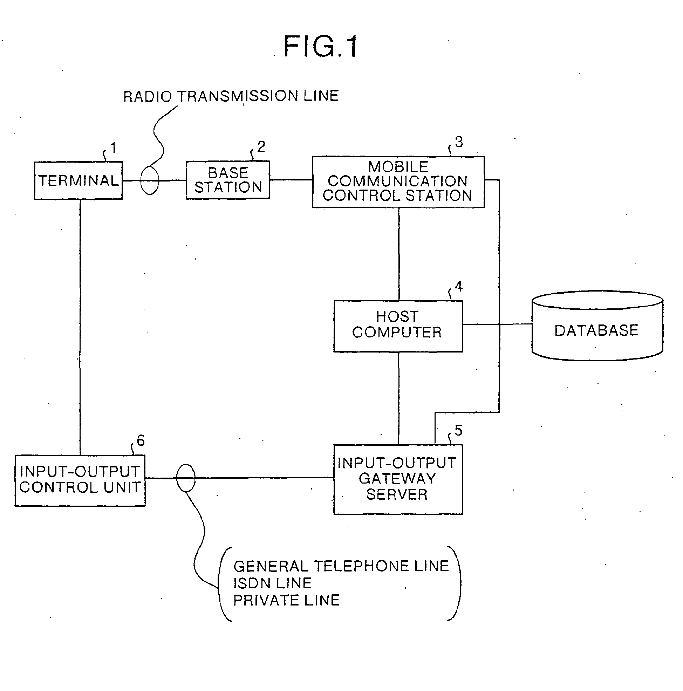

Fig. 1 shows a configuration of a first embodiment of the 28 information input-output system according to this invention. In Fig. 1, reference numeral 1 represents a portable information device or a mobile communication terminal (henceforth, terminal 1) such as a PHS or a cellular phone. More specifically, the device or the terminal can get easy access to information in a host computer, that provides a variety of services, through operation with its display screen. Further, each of them transmits an authentication code, that is used for verification whether a user operating the device can access the information, to an input-output control unit explained below. The cellular phone mentioned here employs a communication system of FDMA (Frequency Division Multiple Access), TDMA (Time Division Multiple Access), or CDMA (Code Division Multiple Access).

Reference numeral 2 represents a radio base station (henceforth, base station 2) that performs communications with the terminal 1 over a radio transmission path. Reference numeral 3 represents a mobile communication control station (or a computer in the mobile communication control station) that allocates a target device for connection according to a destination of transmission from the terminal 1. Reference numeral 4 represents a host computer that has a database relating to services that can be provided to the user of the terminal 1. Reference numeral 5 represents an input-output gateway server that stores data sent from the host computer 4 and transmits the data to an external device connected to the server through a line (a general telephone line, an ISDN line, or a private line). Reference numeral 6 represents an input-output control unit that controls an external device (printer, or so) based on the data from the input-output gateway server 5.

In the input-output control unit 6 of this embodiment, the term "input" indicates entry of information from an input device such as a scanner and a digital camera, and wired or wireless external communication equipment. The term "output" indicates output of information to a printer, a recording medium, an image processor, a sound-source data playback device, and wired or wireless external communication equipment. The data from the host computer 4 includes text data (newspapers or publications, etc.), binary data, facsimile data, image data (photos, video, etc.), or sound source data. The input-output control unit 6 is installed in a plurality of locations in order to support the mobile terminal 1. Therefore, in this embodiment, desired data is output to any of the input-output control units located around the destination where the user goes according to changes of the destination.

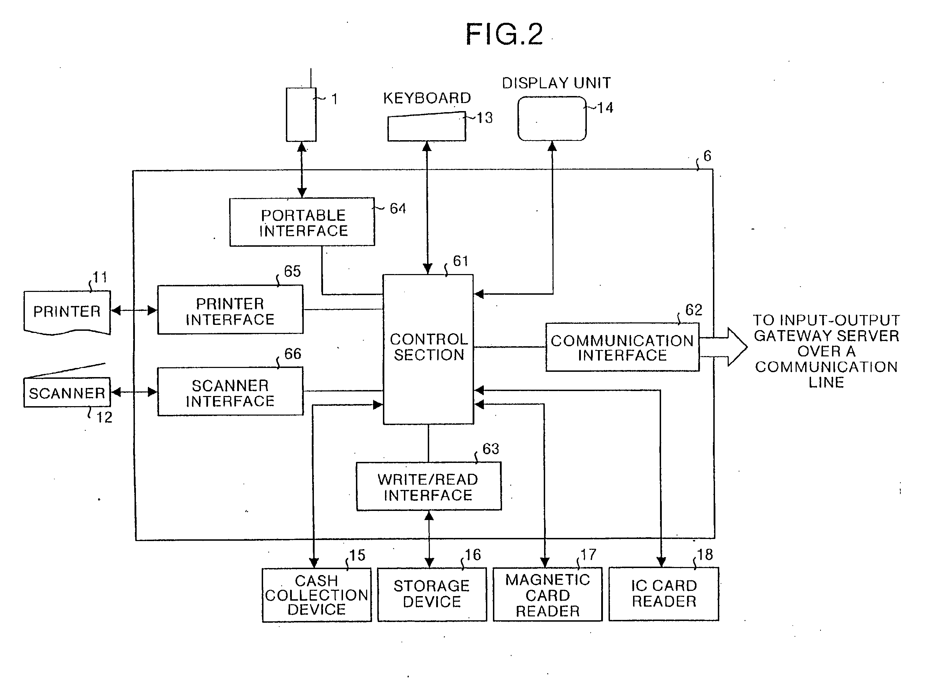

Fig. 2 shows a detailed configuration within the input-output control unit 6 and a configuration around the input-output control unit 6. In Fig. 2, reference numeral 61 represents a control section that controls operation of the input-output control unit 6. Reference numeral 62 represents a communication interface that performs data transaction with the input-output gateway server 5, 63 a write/read interface to store data in an FD and an MO, or the like, and 64 a portable interface that performs communications with the terminal 1. Reference numeral 65 represents a printer interface connected to a printer (or any other external device for output of information), and 66 a scanner interface connected to a scanner (or any other external device for entry of information).

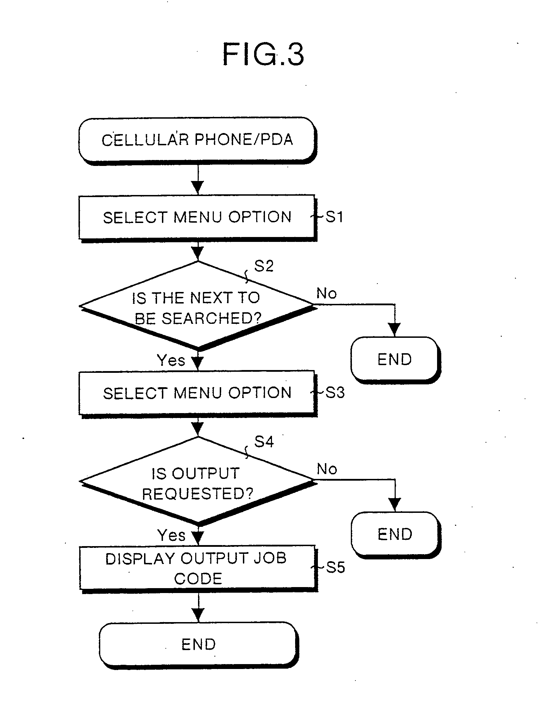

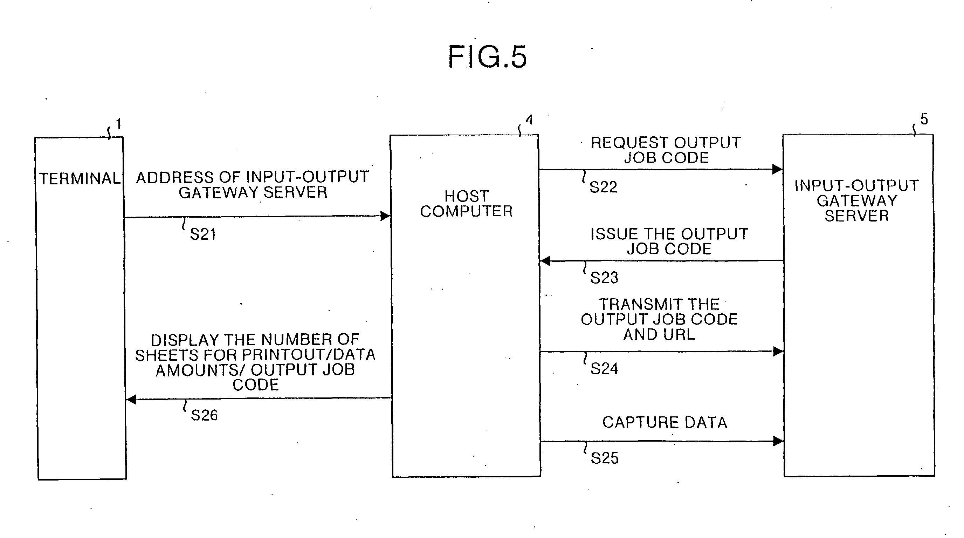

Operation of the information input-output system based on the above configuration is explained below with reference to Fig. 3, Fig. 4, Fig. 5, and Fig. 6. Fig. 3 shows a flow chart of the processing in the terminal 1 (addressing first control and second control), and Fig. 5 shows an example of the operation for the first control and the second control in the information input-output system. More specifically, Fig. 5 shows operations since the user of the terminal 1 operates its display until information within a host computer 4, that provides a variety of services, is transmitted to the input-output gateway server 5.

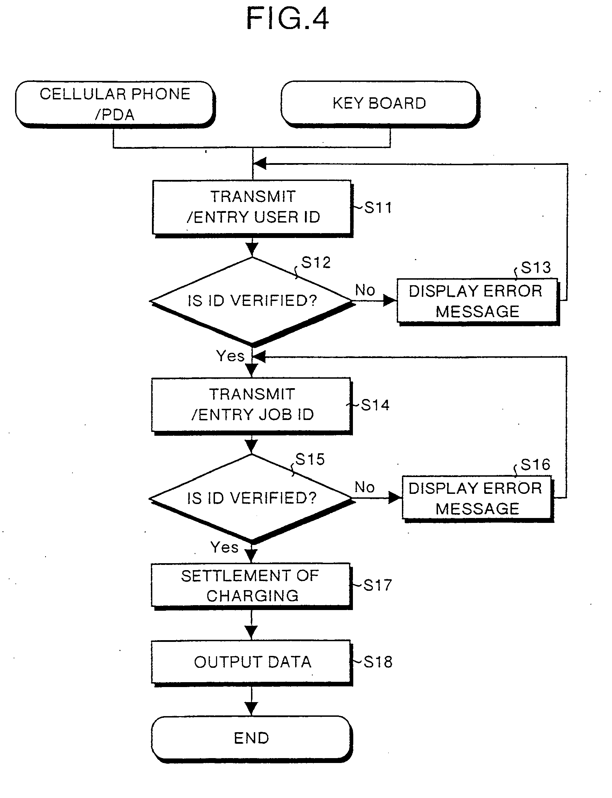

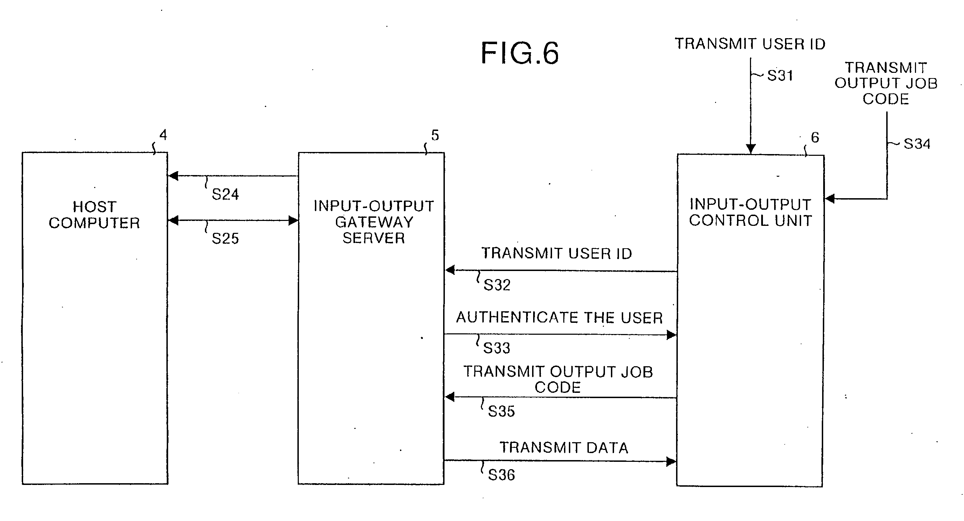

Fig. 4 shows a flow chart of the processing in the terminal 1 (addressing third control) and the settlement of charging. Fig. 6 shows the operation for the third control in the information input-output system. More specifically, Fig. 6 shows operations, by operating the terminal 1, since the input-output gateway server 5 transmits the information stored in the server 5 to the input-output control unit 6 after the user of the terminal 1 is authenticated until the input-output control unit 6 outputs the received information to an external device such as a printer.

As the first control, the user of the terminal 1 selects desired processing (main options: access to bank, purchase of a ticket or an airline ticket, etc.) out of menu options appearing on the screen (step S1), and then proceeds to the next operation (step S2, Yes). If the user does not proceed to the next operation (Step S2, No), the processing is terminated at this point in time. The processing here comes to the point that the terminal 1 and the host computer 4 communicate with each other via the base station 2 and the mobile communication control station, and from then on, the menu option under the control of the host computer 4 is selected in the terminal 1.

As the second control, the user of the terminal 1 selects desired processing (sub-options: information to be output and displayed, or information to be output and printed out, etc.) out of the menu options appearing on the screen controlled from the host computer 4 (step S3), and proceeds to the next operation (step S4, Yes).

At the same time, an address of the input-output gateway server 5 corresponding to "printout" as one of the menu options, for example, is transmitted from the terminal 1 (step S21). The host computer 4 receives this address, and then requests an output job code, that is required when printout is performed, to the input-output gateway server 5 corresponding to the address (step S22).

The input-output gateway server 5 receives this request, and then issues the output job code corresponding to the processing of printout (step S23). The host computer 4 receives the output job code, and then transmits a URL (Uniform Resource Locator) indicating a site, where the information to be output is stored, to the input-output gateway server 5 (step S24). As the last processing in the second control, the input-output gateway server 5 reads out data to be output from a database based on the URL, and temporarily stores the data (step S25). Whereas, the host computer 4 controls so as to display information such as the number of sheets for printout, the data amounts, and the output job code onto the terminal 1 (step S26). If the operation is stopped during the processing at step S4 (step S4 , No), for example, the processing is terminated at this point in time.

As the third control, the user of the terminal 1 enters a user ID (e.g., secret number or own telephone number) into the input-output control unit 6 through operation with the terminal 1 or operation of a keyboard 13 (step S11, step S31). The input-output control unit 6 receives the user ID and then transmits the received user ID to the input-output gateway server 5 (step S32). The input-output gateway server 5 compares the received ID with the ID previously stored inside the server 5. When these two IDs match (step S12, Yes), the input-output gateway server 5 authenticates that the user of the terminal 1 can access the previously stored data (step S33). If these two fail to match (step S12, No), the input-output gateway server 5 provides controls for displaying an error message onto the terminal 1 (step S13), and the user inputs the user ID again (step S11).

The user of the terminal 1, who has been authenticated by the input-output gateway server 5, transmits the output job code previously displayed under the second control to the input-output control unit 6 through operation with the terminal 1 or operation of the keyboard 13 (step S14, step S34). The input-output control unit 6 then transmits the received output job code to the input-output gateway server 5 (step S35).

The input-output gateway server 5 compares the received output job code with the output job code received under the second control. When these two codes match (step S15, Yes), the input-output control unit 6 performs the settlement of charging involved by the output processing (step S17). As the last processing in the third control, the input-output control unit 6 reads out the data previously stored in the input-output gateway server 5, and outputs (prints) the data onto an external device such as a printer installed in any location the nearest to the location where the user is (step S18, step S36). In order to specify any printer installed in the nearest location, a route to the location may also be displayed on the terminal 1. Further, if these two fail to match in the processing at step S15 (step S15, No), the input-output control unit 6 controls so as to display an error message on the terminal 1 (step S16), and the user inputs again the output job code (step S14).

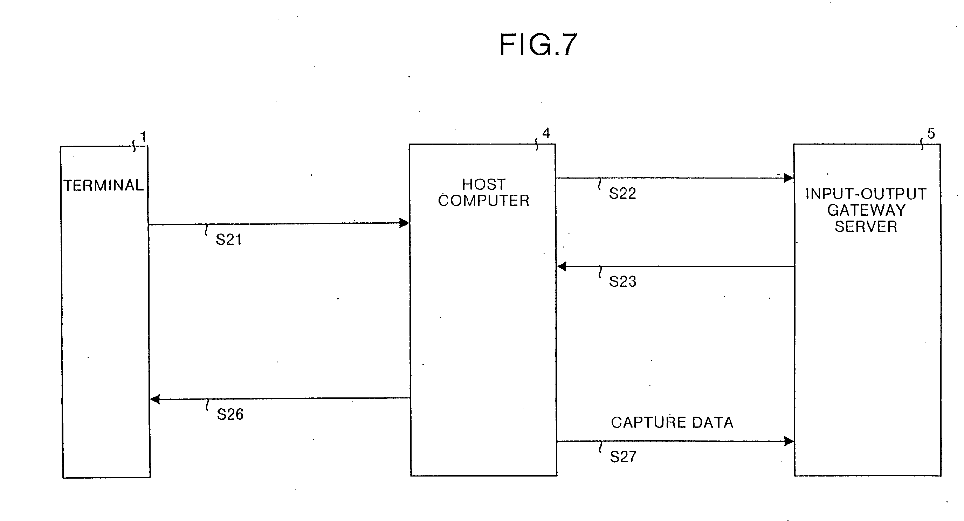

Although the user ID is input through operation with the terminal 1 or operation of the keyboard in this embodiment, in addition to this method, the user ID may be input using the magnetic card or the IC card shown in Fig. 2. Further, for the settlement of charging in this embodiment, a cash collection device, into which a specified amount of cash is previously inserted, may be used, or electronic cash may also be used. Under the second control in this embodiment, although data as an object to be output is captured into the input-output gateway server 5 based on the URL, as shown in Fig. 6, a capturing method is not limited to this method. That is, instead of using the URL, the host computer 4 may directly transmit data as an object to be output to the input-output gateway server 5 through operation from the terminal 1, as shown in Fig. 7. The mobile communication control station 3 and the host computer 4 may be integrated into one configuration.

According to this embodiment, by entering the user ID into the input-output control unit 6 through operation with the terminal 1 or operation of the keyboard 13, only the user of the terminal 1, who knows this particular ID, is allowed to output (print) desired data stored in the input-output gateway server 5. Namely, only when the user of the terminal 1 is verified as a holder (subscriber) of the terminal 1, it is allowed to output the desired data. Therefore, with regard to the security of the information, higher reliability can be ensured as compared to that of the conventional method. Accordingly, in this embodiment, the user of the terminal 1 can easily access the information within the host computer 4 that provides a variety of services. Further, the information can easily be output onto an external device while the security of the information can be ensured.

According to this embodiment, the user of the terminal 1 inputs the user ID into the input-output control unit 6 from the terminal 1 or the keyboard 13, and transmits the output job code after the user is authenticated. In response to reception of this code, the input-output control unit 6 provides controls for output. Therefore, in this embodiment, an output job code is transmitted only when output is required. As a result, a communication fee of waste is eliminated.

Further, according to this embodiment, with regard to the settlement of charging, charging can surely be settled by using any device such as a cash collection device 15 into which a specified amount of cash is previously inserted, or electronic cash.

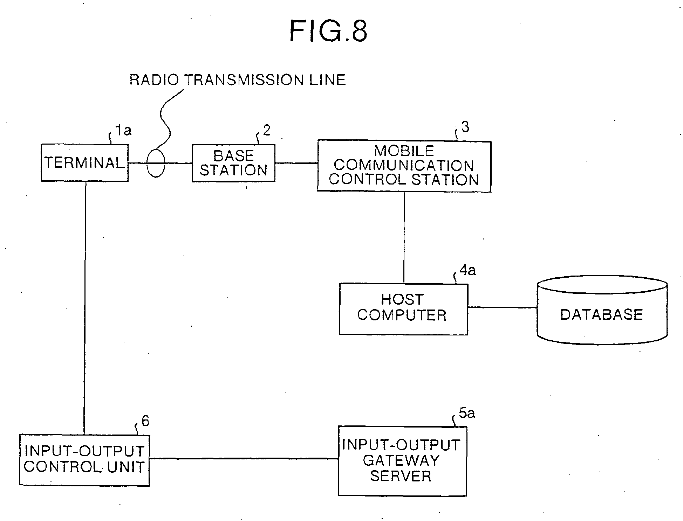

Fig. 8 shows a configuration of a second embodiment of the information input-output system which is not part of the present invention. In Fig. 8, reference numeral 1a represents a portable information device or a mobile communication terminal (henceforth, terminal 1) such as a PHS or a cellular phone, the same as that of the first embodiment. More specifically, the device or the terminal can get easy access to information in a host computer, that provides a variety of services, through operation with its display screen. Further, each of them transmits an authentication code, that is used for verification whether a user operating the device can access the information, to an input-output control unit explained below. A different point of the terminal 1a from the terminal 1 of the first embodiment is that, when the processing of output (printing) is performed, for example, the terminal la directly receives data to be output from a host computer and transmits the data to an input-output control unit.

Reference numeral 4a represents a host computer having a database relating to services that can be provided to the user of the terminal 1a, and transmits the data to be output to the terminal 1a via the mobile communication control station 3 and the base station 2. Reference numeral 5a represents an input-output gateway server that performs user authentication with the input-output control unit 6 connected to the server through a line (a general telephone line, an ISDN line, or a private line). The rest of the configuration is the same as that of the previously explained first embodiment. Therefore, the same signs are assigned to the sections corresponding to those in the first embodiment, and explanation of the sections are omitted.

Operation of the information input-output system based on the above configuration is explained below. The first control is the same as that of the first embodiment, explanation of the control is omitted. As the second control, the user of the terminal 1a selects desired processing (sub-options: information to be output and displayed, or information to be output and printed out, etc.) out of the menu options appearing on the screen controlled from the host computer 4a.

At the same time, a command corresponding to "printout" as one of the menu options, for example, is transmitted from the terminal 1a. The host computer 4a receives this command, and then reads out data to be output from the database, and transmits the data to the terminal 1a. At the last step, the host computer 4a transmits information such as the number of sheets for printout and the data amounts to the terminal 1a.

As the third control, the user of the terminal 1a enters a user ID (e.g., secret number or own telephone number) into the input-output control unit 6 through operation with the terminal 1 or operation of the keyboard 13. The input-output control unit 6 receives the user ID and then transmits the received user ID to the input-output gateway server 5a. The input-output gateway server 5a compares the received ID with the ID previously stored inside the server 5a. When these two IDs match, the input-output gateway server 5a authenticates that the user of the terminal 1a can access the previously stored data. If these two fail to match, the input-output gateway server 5a provides controls for displaying an error message onto the terminal 1a, and the user inputs the user ID again.

The user of the terminal 1a, who has been authenticated by the input-output gateway server 5a, transmits the previously stored data under the second control to the input-output control unit 6 through operation with the terminal 1a. The input-output control unit 6 then performs the settlement of charging involved by the processing for output (in the same manner as that of the first embodiment) . As the last processing of the third control, the input-output control unit 6 then outputs (prints) the data from the terminal 1a onto an external device such as a printer installed near the location where the user is. In this embodiment, the processing for user authentication is not limited to the processing as explained above, but the processing may be performed by using the method explained in the first embodiment.

According to this embodiment as explained above, by entering a user ID into the input-output control unit 6 through operation with the terminal 1a, only the user of the terminal 1a, who knows this particular ID, is allowed to output (print out) desired data. Namely, only when the user of the terminal 1a is verified as a holder (subscriber) of the terminal 1a, it is allowed to output the desired data. Therefore, with regard to the security of the information, higher reliability can be ensured as compared to that of the conventional method. Accordingly, in this embodiment, the user of the terminal 1a can easily access the information within the host computer 4a that provides a variety of services. Further, the information can easily be output onto an external device while the security of the information can be ensured.

According to this embodiment, the user of the terminal 1a enters the user ID into the input-output control unit 6 from the terminal 1a or the keyboard 13, and transmits desired data after the user is authenticated. In response to reception of the data, the input-output control unit 6 provides controls for output. Therefore, in this embodiment, the desired data is transmitted only when output is required. As a result, a communication fee of waste is eliminated.

Further, according to this embodiment, with regard to the settlement of charging, charging can surely be settled by using any device such as a cash collection device 15 into which a specified amount of cash is previously inserted, or electronic cash.

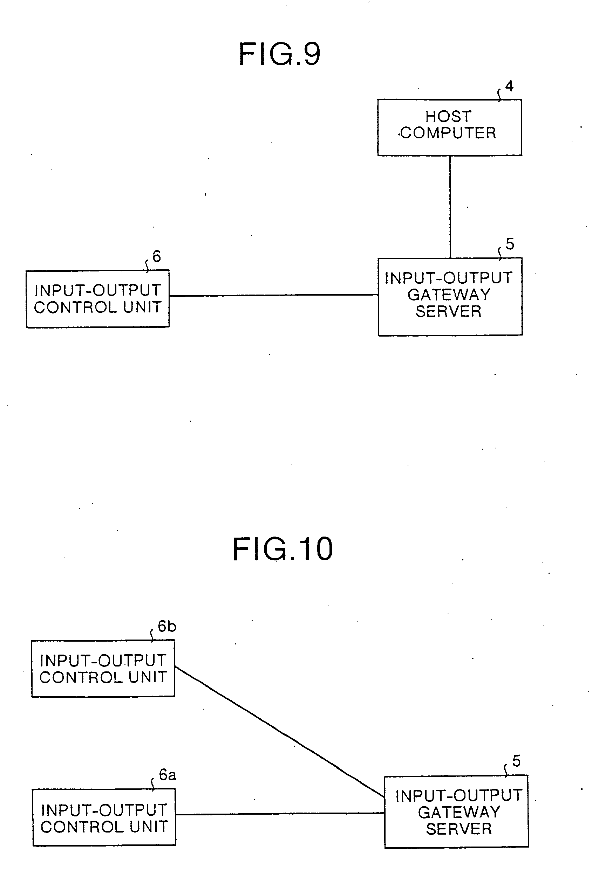

Fig. 9 shows a configuration of a third embodiment of the information input-output system which is not part of the present invention. The operation of each section provided in Fig. 9 is the same as that of the first embodiment. Therefore, the same signs are assigned to the sections, and explanation of the sections are omitted.

Operation of the information input-output system based on the above configuration is explained below. In this embodiment, when data within the host computer 4 is to be output, a user ID (e.g. , secret number) is entered from the input-output control unit 6 to the input-output gateway server 5 through operation with its keyboard 13. In response to reception of the ID, the input-output gateway server 5 compares the received ID with the ID previously stored inside the server 5. When these two IDs match, the input-output gateway server 5 authenticates that the user of the input-output control unit 6 can access the data within the host computer 4. If these two fail to match, the input-output gateway server 5 provides controls for displaying an error message onto the input-output control unit 6, and the user inputs the user ID again.

The user of the input-output control unit 6, who has been authenticated by the input-output gateway server 5, requests desired data to the input-output gateway server 5 through operation with its keyboard 13. The input-output gateway server 5 then reads out data within the host computer and provides controls for transmitting the data to the input-output control unit 6. At the last step, the input-output control unit 6 outputs (prints) the received data onto an external device such as a printer installed near the location where the user is. Although the user ID is input through operation with the keyboard 13 in this embodiment, in addition to this method, the user ID may be input using the magnetic card or the IC card shown in Fig. 2.

According to this embodiment as explained above, by entering a user ID into the input-output control unit 6 through operation with its keyboard 13, only the user of the input-output control unit 6, who knows this particular user ID, is allowed to retrieve (print) data within the host computer 4. Namely, only when the user of the input-output control unit 6 is verified as a subscriber who can access the data within the host computer 4, it is allowed to output the desired data. Therefore, with regard to the security of the information, high reliability can be ensured. Accordingly, in this embodiment, the user of the input-output control unit 6 can easily access the information within the host computer 4 that provides a variety of services. Further, the information can easily be output onto an external device while the security of the information can be ensured.

Fig. 10 shows a configuration of a fourth embodiment of the information input-output system which is not part of the present invention. Operation of input-output control units 6a and 6b and the input-output gateway server 5 provided in Fig. 10 is the same as that of the first embodiment previously explained.

Operation of the information input-output system based on the above configuration is explained below. In this embodiment, the operation when data captured by a scanner 12 into the input-output control unit 6b is to be printed out by the input-output control unit 6a is explained. A user ID (e.g., secret number) is input from the input-output control unit 6a to the input-output gateway server 5 through operation with its keyboard 13. In response to reception of the ID, the input-output gateway server 5 compares the received ID with the ID previously stored inside the server 5. When these two IDs match, the input-output gateway server 5 authenticates that the user of the input-output control unit 6 can access the data within the input-output control unit 6b. If these two fail to match, the input-output gateway server 5 provides controls for displaying an error message onto the input-output control unit 6a, and the user inputs the user ID again.

The user of the input-output control unit 6a, who has been authenticated by the input-output gateway server 5, requests desired data to the input-output gateway server 5 through operation with its keyboard 13. The input-output gateway server 5 then reads out the data within the input-output control unit 6b and provides controls for transmitting the data to the input-output control unit 6a. At the last step, the input-output control unit 6a outputs (prints) the received data onto an external device such as a printer installed near the location where the user is. Although the user ID is input through operation with the keyboard 13 in this embodiment, in addition to this method, the user ID may be input using the magnetic card or the IC card shown in Fig. 2.

According to this embodiment as explained above, by entering a user ID into the input-output control unit 6a through operation with its keyboard 13, only the user of the input-output control unit 6a, who knows this particular user ID, is allowed to retrieve (print) data within the input-output control unit 6b. Namely, only when the user of the input-output control unit 6a is verified as a subscriber who can access the data within the input-output control unit 6b, it is allowed to output the desired data. Therefore, with regard to the security of the information, high reliability can be ensured. Accordingly, in this embodiment, the user of the input-output control unit 6a can easily access the information within the input-output control unit 6b. Further, the information can easily be output onto an external device while the security of the information can be ensured.

As explained above, according to one aspect of this invention, by entering an authentication code into the input-output control unit through operation with a terminal or its keyboard, only the user of this terminal, who knows this particular authentication code, retrieves desired data stored in a service provision unit. Namely, only when the user of the terminal is verified as a holder (subscriber) of this terminal, it is allowed to output the desired data. Therefore, with regard to the security of the information, higher reliability can be ensured as compared to that of the conventional method. Accordingly, it is possible to obtain an information input-output system which allows the user of the terminal to easily access information within the service provision unit, and further enables easy output of the information onto an external device while the security of the information can be ensured.

According to another aspect of this invention, by entering an authentication code into the input-output control unit through operation with a terminal, only the user of this terminal, who knows this particular authentication code, retrieves desired data through the terminal. Namely, only when the user of the terminal is verified as a holder (subscriber) of this terminal, it is allowed to output the desired data. Therefore, with regard to the security of the information, higher reliability can be ensured as compared to that of the conventional method. Accordingly, it is possible to obtain an information input-output system which allows the user of the terminal to easily access information within the service provision unit, and further enables easy output of the information onto an external device while the security of the information can be ensured.

Further, the user of a terminal enters a user ID into the input-output control unit through the terminal or its keyboard, and then transmits an output command (output job code) after the user is authenticated. In response to reception of this code, the input-output control unit provides controls for output. Therefore, the output job code is transmitted only when output is required. As a result, a communication fee of waste can be eliminated.

Further, with regard to the settlement of charging, charging can surely be settled by using any device such as a cash collection device into which a specified amount of cash is previously inserted, or electronic cash.

Further, since a map is displayed on the screen of the terminal, any of input-output control units, that are installed around the location where the user is, can efficiently be specified.

According to still another aspect of this invention, by entering an authentication code into the input-output control unit through operation with its keyboard, only the user of this input-output control unit, who knows this particular authentication code, retrieves data within a service provision unit. Namely, only when the user of this input-output control unit is verified as a subscriber who can access the data within the service provision unit, it is allowed to output the desired data. Therefore, with regard to the security of the information, high reliability can be ensured. Accordingly, it is possible to obtain an information input-output system which allows the user of the input-output control unit to easily access information within the service provision unit, and further enables easy output of the information onto an external device while the security of the information can be ensured.

According to still another aspect of this invention, by entering an authentication code into the input-output control unit through operation with its keyboard, only the user of this input-output control unit, who knows this particular authentication code, retrieves data within another input-output control unit. Namely, only when the user of the specified input-output control unit is verified as a subscriber who can access the data within another input-output control unit, it is allowed to output the desired data. Therefore, with regard to the security of the information, high reliability can be ensured. Accordingly, it is possible to obtain an information input-output system which allows the user of the specified input-output control unit to easily access information within another input-output control unit, and further enables easy output of the information onto an external device while the security of the information can be ensured.

Further, the input-output control unit has devices such as a printer and a storage device (memory) as external equipment for output. Accordingly, articles can immediately be read on a retrieved newspaper or publication, and further the retrieved newspaper or publication can be stored.

Further, the input-output control unit has devices such as a sound-source data playback device and a storage device (memory) as external equipment for output. Accordingly, music can immediately be played back from received sound source data, and further the sound source data can be stored.

Further, the input-output control unit has devices such as a color printer, a digital camera, and a storage device (memory) as external equipment for output. Accordingly, received photos or video can immediately be reproduced, and further the photos and the video can be stored.

According to still another aspect of this invention, an authentication code is entered into an input-output control unit through operation with a terminal. Accordingly, only when the user of this terminal is verified as a holder (subscriber) of this terminal, it is allowed to output desired data. Therefore, with regard to the security of the information, high reliability can be ensured.

According to still another aspect of this invention, with regard to the settlement of charging, charging can surely be settled by using any device such as a cash collection device into which a specified amount of cash is previously inserted, or electronic cash.

The invention is defined by the following claims.

## Claims

1. An information input-output system for outputting information comprising:
a mobile communication terminal (1);
a service provision unit (4) having a database relating to services that can be provided to a user of said mobile communication terminal (1);
an input-output gateway server (5); and
an input-output control unit (6) remote from said mobile communication terminal (1); wherein
the service provision unit (4) is configured
to perform communications with said mobile communication terminal (1) over a radio transmission line,
to receive a request for a service from the mobile communication terminal (1),
to request an output job code from the input-output gateway server (5),
to receive the output job code from the input-output gateway server (5),
to transmit the output job code to the mobile communication terminal (1), and
to transmit the output job code and an uniform resource locator indicating a site, where the information to be output is stored to the input-output gateway server (5);
the input-output gateway server (5) is configured
to store an authentication code of the user,
to receive a request, from the service provision unit (4), for the output job code,
to issue the output job code to the service provision unit (4),
to receive from the service provision unit (4), the output job code and the uniform resource locator indicating a site, where the information to be output is stored,
to read out the data being the information to be output, from the database based on the uniform resource locator, and
to temporarily store the data received from the data base;
the input-output control unit (6) from which the data is desired to be output is configured to receive an authentication code and an output job code from said mobile communication terminal (1) and to transmit the authentication code and the output job code to the input-output gateway server (5);
the input-output gateway server (5) is further configured
to receive from the input-output control unit (6) the authentication code and the output job code received from the mobile communication terminal (1), and
to authenticate the user, wherein when the user is authenticated by said input-output gateway server (5) by comparing the authentication code stored with the authentication code received from the input-output control unit (6) and the output job code received from the input-output control unit (6) with the output job code received from the service provision unit (4) as a subscriber who can be provided with the service, said remote input-output control unit (6) receives the previously stored data from the input-output gateway server (5) and then outputs the data.

2. The information input-output system according to claim 1, wherein charging is settled by using any device such as a cash collection device into which a specified amount of cash is previously inserted, or electronic cash such as an IC card or a magnetic card.

3. The information input-output system according to claim 1 or 2, wherein a route to the location where said input-output control unit (6) is installed is displayed on said terminal (1).

4. The information input-output system according to claim 1, further comprising:
a verification unit configured to verify whether the user of said terminal (1) is a subscriber who can be provided with the variety of services; and
when the user is authenticated by said verification unit as a subscriber who can be provided with the service, said input-output control unit (6) receives the data at a predetermined timing and then outputs the data.

5. The information input-output system according to any one of claims 1 to 4, wherein said input-output control unit (6) which receives data from a mobile communication terminal (1) when an output command is input, and at the same time starts the settlement of charging by using any device such as a cash collection device into which a specified amount of cash is previously inserted, or electronic cash such as an IC card or a magnetic card.

6. An information input-output method for outputting information, comprising the steps of:
providing a mobile communication terminal (1);
providing a service provision unit (4) having a database relating to services that can be provided to a user of said mobile communication terminal (1);
providing an input-output gateway server (5);
providing an input-output control unit (6) remote from said mobile communication terminal;
storing, by the input-output gateway server (5), an authentication code of the user;
performing, by the service provision unit (4), communication with the mobile communication terminal (1) over a radio transmission line;receiving (S21), by the service provision unit (4), a request for a service from the mobile communication terminal (1);
requesting (S22), by the service provision unit (4), an output job code from the input-output gateway server (5);
receiving (S22), by the input-output gateway server (5), the request from the service provision unit (4), for the output job code;
issuing (S23), by the input-output gateway server (5), the output job code to the service provision unit (4);
receiving (S23), by the service provision unit (4), the output job code from the input-output gateway server (5);
transmitting the output job code from the service provision unit (4) to the mobile communication terminal (1);
transmittng (S24) the output job code and an uniform resource location indicating a site, where the information to be output is stored from the service provision unit (4) to the input-output gateway server (5);
receiving (S24), by the input-output gateway server (5), the output job code and the uniform resource location indicating the site, were the information to be output is stored, from the service provision unit (4);
reading out (S25), by the input-output gateway server (5), the data being the information to be output, from the database based on the uniform resource locator;
temporarily storing (S25), by the input-output gateway server (5), the data received from the database;
receiving (S31, S34), by the input-output control unit (6), from which the data is desired to be output, an authentication code and an output job code from said mobile communication terminal (1);
transmitting (S32, S35) the authentication code and the output job code from the input-output control unit (6) to the input-output gateway server (5);
receiving (S32, S35), by the input-output gateway server (5), the authentication code and the output job code received from the mobile communication terminal (1), from the input-output control unit (6);
authenticating, by the input-output gateway server (5), the user by comparing the authentication code stored with the authentication code received from the input-output control unit (6) and the output job code received from the input-output control unit (6) with the output job code received from the service provision unit (4) as a subscriber, who can be provided with the service;
when the user is a subscriber (S33) who can be provided with the service, then receiving (S36) the previously stored data from the input-output gateway server (5), and then
outputting (S18) the data.

## Patentansprüche

1. Informations-Eingabe-Ausgabe-System zur Ausgabe von Information, das aufweist:
ein mobiles Kommunikations-Terminal bzw. Kommunikations-Endgerät (1);
eine Dienstbereitstellungseinheit (4) mit einer Datenbank mit Bezug auf Dienste, die einem Nutzer des mobilen Kommunikations-Terminals bzw. Kommunikations-Endgerätes (1) bereitgestellt werden können;
einen Eingabe-Ausgabe-Gatewayserver (5); und
eine Eingabe-Ausgabe-Steuereinheit (6), die entfernt von dem mobilen Kommunikations-Terminal bzw. Kommunikations-Endgerät (1) ist;
wobei
die Dienstbereitstellungseinheit (4) konfiguriert ist,
um Kommunikation mit dem mobilen Kommunikations-Terminal bzw. Kommunikations-Endgerät (1) über eine Funkübertragungsstrecke bzw. Funkübertragungskanal durchzuführen,
um eine Anforderung eines Dienstes von dem mobilen Kommunikations-Terminal bzw. Kommunikations-Endgerät (1) zu empfangen,
um einen Ausgabejobcode von dem Eingabe-Ausgabe-Gatewayserver (5) abzufragen,
um den Ausgabejobcode von dem Eingabe-Ausgabe-Gatewayserver (5) zu empfangen,
um den Ausgabejobcode zu dem mobilen Kommunikations-Terminal bzw. Kommunikations-Endgerät (1) zu übertragen, und
um den Ausgabejobcode und einen Uniform-Resource-Locator bzw. eine Internetadresse, die eine Seite angibt bzw. anzeigt, wo die Information, die auszugeben ist, gespeichert ist, zu dem Eingabe-Ausgabe-Gatewayserver (5) zu übertragen;
der Eingabe-Ausgabe-Gatewayserver (5) konfiguriert ist,
um einen Authentifizierungscode des Nutzers zu speichern,
um eine Anforderung für den Ausgabejobcode von der Dienstbereitstellungseinheit (4) zu empfangen,
um den Ausgabejobcode an die Dienstbereitstellungseinheit (4) auszugeben,
um von der Dienstbereitstellungseinheit (4) den Ausgabejobcode und den Uniform-Resource-Locator bzw. die Internetadresse, die eine Seite angibt, wo die Information, die auszugeben ist, gespeichert ist, zu empfangen,
um die Daten, welche die Information ist, die auszugeben ist, von der Datenbank auszulesen, und zwar basierend auf dem Uniform-Resource-Locator bzw. der Internetadresse, und
um die Daten, die von der Datenbank empfangen wurden, temporär zu speichern;
die Eingabe-Ausgabe-Steuereinheit (6) von welcher es gewünscht ist, dass die Daten ausgegeben werden, konfiguriert ist, um einen Authentifizierungscode und einen Ausgabejobcode von dem mobilen Kommunikations-Terminal bzw. Kommunikations-Endgerät (1) zu empfangen und, um den Authentifizierungscode und den Ausgabejobcode an den Eingabe-Ausgabe-Gatewayserver (5) zu übertragen;
der Eingabe-Ausgabe-Gatewayserver (5) weiter konfiguriert ist,
um von der Eingabe-Ausgabe-Steuereinheit (6) den Authentifizierungscode und den Ausgabejobcode, der von dem mobilen Kommunikations-Terminal bzw. Kommunikations-Endgerät (1) empfangen wurde, zu empfangen, und
um den Nutzer zu authentifizieren, wobei wenn der Nutzer durch den Eingabe-Ausgabe-Gatewayserver (5) durch Vergleichen des gespeicherten Authentifizierungscodes mit dem Authentifizierungscode, der von der Eingabe-Ausgabe-Steuereinheit (6) empfangen wurde und des Ausgabejobcodes, der von der Eingabe-Ausgabe-Steuereinheit (6) empfangen wurde mit dem Ausgabejobcode, der von der Dienstbereitstellungseinheit (4) empfangen wurde, als ein Teilnehmer bzw. Anschlussinhaber, welcher mit dem Dienst bereitgestellt werden kann, authentifiziert ist, die entfernte Eingabe-Ausgabe-Steuereinheit (6) die vorherig gespeicherten Daten von dem Eingabe-Ausgabe-Gatewayserver (5) empfängt und dann die Daten ausgibt.

2. Informations-Eingabe-Ausgabe-System nach Anspruch 1, wobei die Abrechnung ausgeglichen wird, indem irgendeine Vorrichtung wie zum Beispiel eine Geldeinzugsvorrichtung bzw. Geldsammelvorrichtung, in welche eine spezifizierte Geldmenge vorherig eingefügt bzw. einbezahlt wurde oder Elektronikcash bzw. ein elektronisches Zahlungsverfahren wie zum Beispiel eine EC-Karte oder eine magnetische Karte verwendet wird.

3. Informations-Eingabe-Ausgabe-System nach Anspruch 1 oder 2, wobei eine Route bzw. ein Weg zu dem Ort an dem die Eingabe-Ausgabe-Steuereinheit (6) installiert ist, an dem Terminal bzw. Endgerät (1) angezeigt wird.

4. Informations-Eingabe-Ausgabe-System nach Anspruch 1, weiter aufweisend:
eine Verifikationseinheit, die konfiguriert ist, um zu verifizieren, ob der Nutzer des Terminals bzw. Endgeräts (1) ein Teilnehmer bzw. Anschlussinhaber ist, dem die Vielzahl der Dienste bereitgestellt werden kann; und
wenn der Nutzer durch die Verifikationseinheit als ein Teilnehmer bzw. Anschlussinhaber authentifiziert ist, dem der Dienst bereitgestellt werden kann, empfängt die Eingabe-Ausgabe-Steuereinheit (6) die Daten zu einem vorbestimmten Zeitpunkt und gibt die Daten dann aus.

5. Informations-Eingabe-Ausgabe-System nach irgendeinem der Ansprüche 1 bis 4, wobei die Eingabe-Ausgabe-Steuereinheit (6), welche die Daten von dem mobilen Kommunikations-Terminal bzw. Kommunikations-Endgerät (1) empfängt, wenn ein Ausgabekommando eingegeben ist, und zum selben Zeitpunkt das Ausgleichen der Abrechnung beginnt, und zwar indem irgendeine Vorrichtung, wie zum Beispiel eine Geldeinzugsvorrichtung bzw. Geldsammelvorrichtung, in welche eine spezifizierte Geldmenge vorherig eingefügt bzw. eingezahlt wurde oder Elektronikcash bzw. ein elektronisches Bezahlverfahren, wie zum Beispiel eine EC-Karte oder eine Magnetkarte verwendet wird.

6. Informations-Eingabe-Ausgabe-Verfahren zum Ausgeben von Information, das die Schritte aufweist:
Bereitstellen eines mobiles Kommunikations-Terminals bzw. Kommunikations-Endgeräts (1);
Bereitstellen einer Dienstbereitstellungseinheit (4) mit einer Datenbank mit Bezug auf Dienste, die einem Nutzer des mobilen Kommunikations-Terminals bzw. Kommunikations-Endgerätes (1) bereitgestellt werden können;
Bereitstellen eines Eingabe-Ausgabe-Gatewayservers (5);
Bereitstellen einer Eingabe-Ausgabe-Steuereinheit (6), die entfernt von dem mobilen Kommunikations-Terminal bzw. Kommunikations-Endgerät (1) ist;
Speichern eines Authentifizierungscodes des Nutzers durch den Eingabe-Ausgabe-Gatewayserver (5);
Durchführen von Kommunikation mit dem mobilen Kommunikations-Terminal bzw. Kommunikations-Endgerät (1) über die Funkübertragungsstrecke bzw. den Funkübertragungskanal, und zwar durch die Dienstbereitstellungseinheit (4);
Empfangen (S21) einer Anforderung für einen Dienst von dem mobilen Kommunikations-Terminal bzw. Kommunikations-Endgerät (1) und zwar durch die Dienstbereitstellungseinheit (4);
Anfordern (S22) eines Ausgabejobcodes von dem Eingabe-Ausgabe-Gatewayserver (5), und zwar durch die Dienstbereitstellungseinheit (4);
Empfangen (S22) der Anforderung von der Dienstbereitstellungseinheit (4) für den Ausgabejobcode, und zwar durch den Eingabe-Ausgabe-Gatewayserver (5);
Ausgabe (S23) des Ausgabejobcodes zu der Dienstbereitstellungseinheit (4), und zwar durch den Eingabe-Ausgabe-Gatewayserver (5);
Empfangen (S23) des Ausgabejobcodes von dem Eingabe-Ausgabe-Gatewayserver (5), und zwar durch die Dienstbereitstellungseinheit (4);
Übertragen des Ausgabejobcodes von der Dienstbereitstellungseinheit (4) zu dem mobilen Kommunikations-Terminal bzw. Kommunikations-Endgerät (1);
Übertragen (S24) des Ausgabejobcodes und eines Uniform-Resource-Locators bzw. einer Internetadresse, die eine Seite anzeigt bzw. angibt, wo die Information, die auszugeben ist, gespeichert ist, und zwar von der Dienstbereitstellungseinheit (4) zu dem Eingabe-Ausgabe-Gatewayserver (5);
Empfangen (S24) des Ausgabejobcodes und des Uniform-Resource-Locators bzw. der Internetadresse, welcher bzw. welche die Seite anzeigt bzw. angibt, wo die Information, die von der Dienstbereitstellungseinheit (4) auszugeben ist, gespeichert ist, und zwar durch den Eingabe-Ausgabe-Gatewayserver (5);
Auslesen (S25) der Daten, von der Datenbank, welche die Information ist, die auszugeben ist, und zwar basierend auf dem Uniform-Resource-Locator bzw. der Internetadresse, und zwar durch den Eingabe-Ausgabe-Gatewayserver (5);
temporäres Speichern (S25) der Daten, die von der Datenbank empfangen wurden, und zwar durch den Eingabe-Ausgabe-Gatewayserver (5);
Empfangen (S31, S34) eines Authentifizierungscodes und eines Ausgabejobcodes von dem mobilen Kommunikations-Terminal bzw. Kommunikations-Endgerät (1) durch die Eingabe-Ausgabe-Steuereinheit (6), von welcher es gewünscht ist, dass die Daten ausgegeben werden;
Übertragen (S32, S35) des Authentifikationscodes und des Ausgabejobcodes von der Eingabe-Ausgabe-Steuereinheit (6) zu dem Eingabe-Ausgabe-Gatewayserver (5);
Empfangen (S32, S35) des Authentifikationscodes und des Ausgabejobcodes, der von dem mobilen Kommunikations-Terminal bzw. Kommunikations-Endgerät (1) von der Eingabe-Ausgabe-Steuereinheit (6) empfangen wurde, und zwar durch den Eingabe-Ausgabe-Gatewayserver (5);
Authentifizieren des Nutzers als ein Teilnehmer bzw. Anschlussinhaber, welcher dem Dienst bereitgestellt werden kann, und zwar durch Vergleichen des gespeicherten Authentifizierungscodes mit dem von der Eingabe-Ausgabe-Steuereinheit (6) empfangenen Authentifizierungscodes und des Ausgabejobcodes, der von der Eingabe-Ausgabe-Steuereinheit (6) empfangen wurde, mit dem Ausgabejobcode, der von der Dienstbereitstellungseinheit (4) empfangen wurde, und zwar durch den Eingabe-Ausgabe-Gatewayserver (5);
wenn der Nutzer ein Teilnehmer bzw. Anschlussinhaber (S33) ist, dem der Dienst bereitgestellt werden kann, dann werden die vorherig gespeicherten Daten von dem Eingabe-Ausgabe-Gatewayserver (5) empfangen (S36), und dann werden die Daten ausgegeben (S18).

## Revendications

1. Système d'entrée-sortie d'informations pour délivrer des informations comprenant :
un terminal de communication mobile (1) ;
une unité de fourniture de service (4) comportant une base de données relative à des services qui peuvent être fournis à un utilisateur dudit terminal de communication mobile (1) ;
un serveur de passerelle d'entrée-sortie (5) ; et
une unité de commande d'entrée-sortie (6) à distance dudit terminal de communication mobile (1) ;
dans lequel
l'unité de fourniture de service (4) est configurée
pour effectuer des communications avec ledit terminal de communication mobile (1) sur une ligne de transmission radio,
pour recevoir une demande pour un service du terminal de communication mobile (1),
pour demander un code de tâche de sortie au serveur de passerelle d'entrée-sortie (5),
pour recevoir le code de tâche de sortie du serveur de passerelle d'entrée-sortie (5),
pour transmettre le code de tâche de sortie au terminal de communication mobile (1), et
pour transmettre le code de tâche de sortie et une adresse URL indiquant un site, où les informations à délivrer sont mémorisées dans le serveur de passerelle d'entrée-sortie (5) ;
le serveur de passerelle d'entrée-sortie (5) est configuré
pour mémoriser un code d'authentification pour l'utilisateur,
pour recevoir une demande, de l'unité de fourniture de service (4), pour le code de tâche de sortie,
pour émettre le code de tâche de sortie pour l'unité de fourniture de service (4),
pour recevoir, de l'unité de fourniture de service (4), le code de tâche de sortie et l'adresse URL indiquant un site, où les informations à délivrer sont mémorisées,
pour extraire les données qui sont les informations à délivrer, de la base de données sur la base de l'adresse URL, et
pour mémoriser temporairement les données reçues de la base de données ;
l'unité de commande d'entrée-sortie (6) de laquelle on souhaite que les données soient délivrées est configurée pour recevoir un code d'authentification et un code de tâche de sortie dudit terminal de communication mobile (1) et pour transmettre le code d'authentification et le code de tâche de sortie au serveur de passerelle d'entrée-sortie (5) ;
le serveur de passerelle d'entrée-sortie (5) est en outre configuré
pour recevoir, de l'unité de commande d'entrée-sortie (6), le code d'authentification et le code de tâche de sortie reçus du terminal de communication mobile (1), et
pour authentifier l'utilisateur, dans lequel, lorsque l'utilisateur est authentifié par ledit serveur de passerelle d'entrée-sortie (5) en comparant le code d'authentification mémorisé avec le code d'authentification reçu de l'unité de commande d'entrée-sortie (6) et le code de tâche de sortie reçu de l'unité de commande d'entrée-sortie (6) avec le code de tâche de sortie reçu de l'unité de fourniture de service (4) en tant qu'abonné auquel le service peut être fourni, ladite unité de commande d'entrée-sortie (6) à distance reçoit les données mémorisées précédemment du serveur de passerelle d'entrée-sortie (5) et délivre ensuite les données.

2. Système d'entrée-sortie d'informations selon la revendication 1, dans lequel le coût est réglé en utilisant un quelconque dispositif tel qu'un dispositif de collecte de monnaie dans lequel une quantité spécifiée de monnaie est insérée au préalable, ou une monnaie électronique telle qu'une carte à puce ou une carte magnétique.

3. Système d'entrée-sortie d'informations selon la revendication 1 ou 2, dans lequel un trajet vers l'emplacement où ladite unité de commande d'entrée-sortie (6) est installée est affiché sur ledit terminal (1).

4. Système d'entrée-sortie d'informations selon la revendication 1, comprenant en outre :
une unité de vérification configurée pour vérifier si l'utilisateur dudit terminal (1) est un abonné auquel les divers services peuvent être fournis ; et
lorsque l'utilisateur est authentifié par ladite unité de vérification en tant qu'abonné auquel le service peut être fourni, ladite unité de commande d'entrée-sortie (6) reçoit les données selon une synchronisation prédéterminée et délivre ensuite les données.

5. Système d'entrée-sortie d'informations selon l'une quelconque des revendications 1 à 4, dans lequel ladite unité de commande d'entrée-sortie (6) qui reçoit des données d'un terminal de communication mobile (1) lorsqu'une commande de sortie est entrée, et débute en même temps le règlement du coût en utilisant un dispositif quelconque tel qu'un dispositif de collecte de monnaie dans lequel une quantité spécifiée de monnaie est insérée au préalable, ou une monnaie électronique telle qu'une carte à puce ou une carte magnétique.

6. Procédé d'entrée-sortie d'informations pour délivrer des informations, comprenant les étapes consistant à :
fournir un terminal de communication mobile (1) ;
fournir une unité de fourniture de service (4) comportant une base de données relative à des services qui peuvent être fournis à un utilisateur dudit terminal de communication mobile (1) ;
fournir un serveur de passerelle d'entrée-sortie (5) ;
fournir une unité de commande d'entrée-sortie (6) à distance dudit terminal de communication mobile ;
mémoriser, par le serveur de passerelle d'entrée-sortie (5), un code d'authentification de l'utilisateur ;
effectuer, par l'unité de fourniture de service (4), une communication avec le terminal de communication mobile (1) sur une ligne de transmission radio ;
recevoir (S21), par l'unité de fourniture de service (4), une demande pour un service du terminal de communication mobile (1) ;
demander (S22), par l'unité de fourniture de service (4), un code de tâche de sortie au serveur de passerelle d'entrée-sortie (5) ;
recevoir (S22), par le serveur de passerelle d'entrée-sortie (5), la demande de l'unité de fourniture de service (4), pour le code de tâche de sortie ;
émettre (S23), par le serveur de passerelle d'entrée-sortie (5), le code de tâche de sortie pour l'unité de fourniture de service (4) ;
recevoir (S23), par l'unité de fourniture de service (4), le code de tâche de sortie du serveur de passerelle d'entrée-sortie (5) ;
transmettre le code de tâche de sortie de l'unité de fourniture de service (4) au terminal de communication mobile (1) ;
transmettre (S24) le code de tâche de sortie et une adresse URL indiquant un site, où les informations à délivrer sont mémorisées, de l'unité de fourniture de service (4) au serveur de passerelle d'entrée-sortie (5) ;
recevoir (S24), par le serveur de passerelle d'entrée-sortie (5), le code de tâche de sortie et l'adresse URL indiquant le site, où les informations à délivrer sont mémorisées, de l'unité de fourniture de service (4) ;
extraire (S25), par le serveur de passerelle d'entrée-sortie (5), les données qui sont les informations à délivrer, de la base de données sur la base de l'adresse URL ;
mémoriser temporairement (S25), par le serveur de passerelle d'entrée-sortie (5), les données reçues de la base de données ;
recevoir (S31, S34), par l'unité de commande d'entrée-sortie (6), de laquelle on souhaite que les données soient délivrées, un code d'authentification et un code de tâche de sortie dudit terminal de communication mobile (1) ;
transmettre (S32, S35) le code d'authentification et le code de tâche de sortie de l'unité de commande d'entrée-sortie (6) au serveur de passerelle d'entrée-sortie (5) ;
recevoir (S32, S35), par le serveur de passerelle d'entrée-sortie (5), le code d'authentification et le code de tâche de sortie reçus du terminal de communication mobile (1), de l'unité de commande d'entrée-sortie (6) ;
authentifier, par le serveur de passerelle d'entrée-sortie (5), l'utilisateur en comparant le code d'authentification mémorisé avec le code d'authentification reçu de l'unité de commande d'entrée-sortie (6) et le code de tâche de sortie reçu de l'unité de commande d'entrée-sortie (6) avec le code de tâche de sortie reçu de l'unité de fourniture de service (4) en tant qu'abonné, auquel le service peut être fourni ;
lorsque l'utilisateur est un abonné (S33) auquel le service peut être fourni, recevoir (S36) alors les données mémorisées au préalable du serveur de passerelle d'entrée-sortie (5), et ensuite
délivrer (S18) les données.
